# DEMANDE DE BREVET EUROPEEN

(11) **EP 2 589 511 A1**
(43) Date de publication de la demande: **08.05.2013**
(21) Numéro de dépôt: 12190921.2
(22) Date de dépôt: 31.10.2012
(51) Int. Cl.: B60Q 1/26, B60Q 1/44, A42B 3/04

(54) **Casque de protection lumineux**

(30) Priorité: 03.11.2011 FR 1159945
(71) Demandeur: Scorpion Sports Europe, 67300 Schiltigheim (FR)
(72) Inventeur: Rigaud, David, 13880 Velaux (FR); Pfrimmer, Jean-Michel, 67450 Lampertheim (FR)
(74) Mandataire: Roman, Alexis

(57) **Abrégé**

L'invention concerne un casque de protection (1) conçu pour être portée par un utilisateur, ledit casque comportant une calotte externe (10) et un calotin interne (11), ledit casque comportant :
- deux ensembles (2, 3) de sources lumineuses visibles chacun visible selon une direction différente,
- au moins un accéléromètre (4) monté de façon à mesurer les accélérations de l'utilisateur portant ledit casque,
- un moyen de traitement (5) connecté d'une part à l'accéléromètre (4) et d'autre part aux premier et second ensembles (2, 3) de sources lumineuses,
se caractérisant par le fait que
- les ensembles (2, 3) de sources lumineuses sont agencés dans la structure du casque, entre la calotte externe (10) et le calotin interne (11), lequel calotin présente des logements spécifiquement dédiés aux différents composants,
- le moyen de traitement (5) est configuré pour :
o émettre des consignes d'éclairage vers le premier ensemble (2) de sources lumineuses en réponse à la mesure d'une accélération positive, lesdites consignes d'éclairage consistant à faire varier l'intensité lumineuse desdites sources en fonction de ladite accélération mesurée,
o émettre des consignes d'éclairage vers le second ensemble (3) de sources lumineuses en réponse à la mesure d'une accélération négative, lesdites consignes d'éclairage consistant à faire varier l'intensité lumineuse desdites sources en fonction de ladite accélération mesurée.

## Description

### Domaine technique de l'invention.

L'invention a pour objet un casque de protection lumineux et une méthode pour éclairer ce casque. L'invention a également pour objet un procédé de fabrication d'un tel casque.

Elle concerne le domaine technique des accessoires lumineux destinés à améliorer la sécurité des utilisateurs qui les portent, notamment les motocyclistes, cyclistes, skieurs, cavaliers, utilisateurs de jet-ski, quads ou autres, et plus spécifiquement de tout sport ou loisir nécessitant le port d'un casque ou d'un vêtement de protection.

### État de la technique.

Les accessoires lumineux destinés à améliorer la sécurité des utilisateurs qui les portent sont bien connus de l'art antérieur et par exemple décrits dans les documents brevets suivants: US2007063831 (PERKINS), US2002145864 (RALIEGH), US2004156215 (WOOLDRIGE), US2004177428 (MAESE), US2006291193 (HILL), US2010124049 (FABIAN), US20100253501 (DELVONO), US6558016 (RESTAURO), US20080889056 (GROSJEAN), US2009021365 (HURWITZ), US2009034238 (NITE GLOW), US2004008106 (KONCZAL), DE29617877 (HERRMANN), DE20013002 (STEINHAUSER), DE2032689 (EICKS), W02005020731 (GOLAN), W08601379 (EBERT).

On connait plus particulièrement par le document W02011/061663 (ALESSANDRINI), une veste de motard sur laquelle sont fixés deux ensembles de sources lumineuses. Un accéléromètre permet de mesurer les accélérations négatives du motard (décélération ou freinage). Les signaux émis par cet accéléromètre sont convertis en des consignes d'éclairage à destination des ensembles de sources lumineuses. Dans le cas où la valeur mesurée par l'accéléromètre dépasse une première valeur seuil prédéterminée, le premier ensemble de sources lumineuses est éclairé. Dans le cas où la valeur mesurée par l'accéléromètre dépasse une seconde valeur seuil, le second ensemble de sources lumineuses est éclairé. Cette méthode d'éclairage n'est pas totalement satisfaisante car il n'est possible d'attirer l'attention des autres conducteurs qu'en cas de freinage. Cela n'est pas suffisant pour avertir correctement les autres conducteurs de la présence d'un motard.

On connait en outre par le document CA 2.537.316 (LABINE), un casque lumineux comportant des ensembles de sources lumineuses rapportés sur la structure dudit casque, ou tout au moins sont en saillie vers l'extérieur de ladite structure. Ce type de conception est particulièrement complexe à réaliser et peu pratique à installer et à utiliser.

Le but de l'invention est de remédier à cet état des choses. En particulier, un objectif de l'invention est de proposer une méthode permettant d'éclairer de façon plus efficace un casque de protection afin d'augmenter la marge de sécurité de l'utilisateur qui le porte.

Un autre objectif de l'invention est de proposer un casque de protection lumineux améliorant la sécurité de l'utilisateur qui le porte et dont la conception est simple et peu onéreuse et dont l'utilisation est aisée.

### Divulgation de l'invention.

La solution proposée par l'invention est un casque de protection conçu pour être portée par un utilisateur, ledit casque comportant une calotte externe et un calotin interne, ledit casque comportant :
- un premier ensemble de sources lumineuses agencé sur les côtés et/ou à l'avant dudit casque de manière à être visible selon une première direction,
- un second ensemble de sources lumineuses agencé à l'arrière dudit casque de manière à être visible selon une seconde direction,
- les deux ensembles de sources lumineuses sont éloignés de manière à ce qu'ils soient chacun visible selon une direction différente, les deux dits ensembles étant éclairés de manière indépendante,
- l'éclairage du second ensemble de sources lumineuses est indépendant de l'éclairage du premier ensemble de sources lumineuses,
- au moins un accéléromètre monté de façon à mesurer les accélérations de l'utilisateur portant ledit casque, ledit accéléromètre émettant des signaux électriques dont l'intensité est proportionnelle à l'accélération mesurée,
- un moyen de traitement monté dans ledit casque et connecté d'une part à l'accéléromètre et d'autre part aux premier et second ensembles de sources lumineuses, ledit moyen de traitement étant configuré pour convertir les signaux émis par ledit accéléromètre en des consignes d'éclairage à destination desdits ensembles,
- les ensembles de sources lumineuses sont agencés dans la structure du casque, entre la calotte externe et le calotin interne, lequel calotin présente des logements spécifiquement dédiés aux différents composants,
- le premier ensemble est disposé sous la calotte externe rigide, au niveau d'une zone translucide de cette dernière,
- le second ensemble est disposé sous la calotte externe rigide, au niveau d'une zone translucide de cette dernière,
- le moyen de traitement est configuré pour :
   ○ émettre des consignes d'éclairage vers le premier ensemble de sources lumineuses en réponse à la mesure d'une accélération positive, lesdites consignes d'éclairage consistant à faire varier l'intensité lumineuse desdites sources en fonction de ladite accélération mesurée,
   ○ émettre des consignes d'éclairage vers le second ensemble de sources lumineuses en réponse à la mesure d'une accélération négative, lesdites consignes d'éclairage consistant à faire varier l'intensité lumineuse desdites sources en fonction de ladite accélération mesurée.

Il est donc envisager d'éclairer le casque non seulement pendant les phases de freinage, mais également pendant les phases d'accélération. Les périodes pendant lesquelles l'accessoire est illuminé sont donc accrues et rendues plus attractives, ce qui améliore considérablement la sécurité de l'utilisateur. L'éclairage indépendamment et animés des ensembles de sources lumineuses ainsi que l'orientation distincte de ces dernies, agissent en synergie pour générer des signaux qui seront différents selon que l'utilisateur est en phases de freinage ou en phase d'accélération. Les autres personnes qui se trouvent à proximité de l'utilisateur peuvent ainsi adapter leur comportement en fonction de l'intensité du signal lumineux qu'elles recevront. De plus, l'intégration des ensembles de sources lumineuses directement dans la structure du casque permet d'obtenir un produit sans nouvelle zone en saillie, le rendant de fait plus compact, plus sûr et directement utilisable sans aucune autre installation connexe.

D'autres caractéristiques remarquables de la méthode d'éclairage objet de l'invention sont listées dans les revendications secondaires, chacune de ces caractéristiques pouvant être considérée seule ou en combinaison avec les caractéristiques remarquables de la revendication principale.

Un autre aspect de l'invention concerne un procédé de fabrication d'un tel casque, ledit procédé comprenant les étapes consistant à :
a) mouler la calotte externe en utilisant des matériaux composites ou polycarbonates translucides.
b) positionner des pochoirs sur la calotte externe au niveau des zones à éclairer de manière à créer des zones de réservation,
c) préparer la calotte externe en vue de la peindre,
d) peindre la calotte externe,
e) enlever les pochoirs de façon à découvrir les zones de réservations transparentes,
f) vernir la calotte externe,
g) appliquer, sur les zones de réservation, des décalques sérigraphiés avec des zones transparentes pour laisser passer la lumière,
h) mettre en place le calotin interne dans lequel sont intégrés l'ensemble des composants, ledit calotin présentant des logements spécifiquement dédiés auxdits différents composants.

Il est avantageux de mouler la calotte externe en prévoyant des couches de moindre épaisseur au niveau des zones à éclairer, de façon à améliorer la transparence.

En outre, on peut vernir de nouveau la calotte externe après l'étape g)

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- les figures 1a à 1c schématisent un casque de moto vu de profil, et sur lesquelles est illustré un exemple de scénarios d'éclairage du premier ensemble de sources lumineuses,
- les figures 2a à 2c, schématisent un casque de moto vu de derrière, et sur lesquelles est illustré un exemple de scénarios d'éclairage du second ensemble de sources lumineuses,
- la figure 3 est une vue en coupe du casque des figures 1a à 1c, montrant un agencement des différents composants selon un premier mode de réalisation,
- la figure 4 est une vue en coupe du casque des figures 1a à 1c, montrant un agencement des différents composants selon un second mode de réalisation,
- la figure 5 est un diagramme illustrant un scénario possible pour l'éclairage des sources lumineuses,
- la figure 6 est un diagramme illustrant un autre scénario possible pour l'éclairage des sources lumineuses.

### Modes de réalisation de l'invention.

La méthode objet de l'invention s'applique à l'éclairage de casques de motos ou de vélos, de casques de ski, de casques équestre, de vêtements pour la pratique de la moto, du vélo, du ski, de sport équestres, et de manière plus générale, à l'éclairage de tout accessoire de sécurité conçu pour être porté par un utilisateur qui n'est pas protégé par un habitacle. L'objectif est d'éclairer efficacement cet accessoire de sorte que l'utilisateur qui le porte puisse rapidement signaler sa présence aux autres personnes qui l'entourent. Dans un souci de clarté et de simplification, la description qui suit fait uniquement référence à un casque de protection et plus spécifiquement à un casque de moto, sans que cela puisse être considéré comme limitatif.

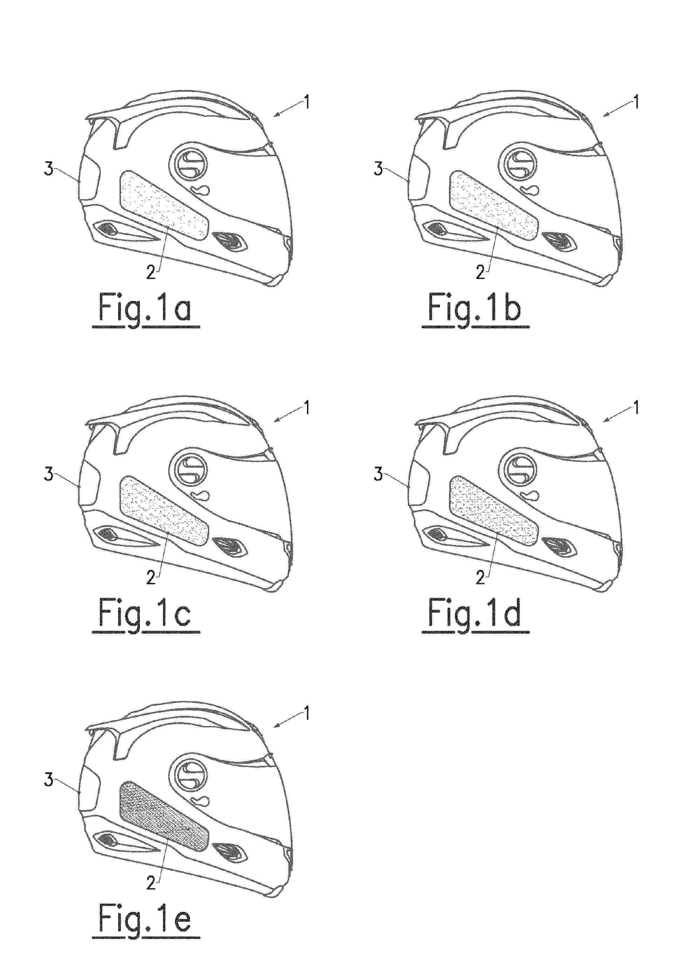

En se rapportant aux figures 1a à 2c, le casque 1 comporte une structure support 10, 11 conçue pour être portée par un motard. Un premier ensemble de sources lumineuses 2 est agencé dans la structure du casque 1 de manière à être visible selon une première direction. En pratique, ce premier ensemble est disposé sur les côtés et/ou à l'avant du casque 1, sous la calotte externe rigide, au niveau d'une zone translucide de cette dernière. Ainsi, lorsque le premier ensemble 2 est éclairé, le signal lumineux émis est apte à se réfléchir dans les rétroviseurs des autres conducteurs qui se trouvent devant ou à côté du motard et sont avertis de la présence de ce dernier. Ces conducteurs peuvent donc anticiper leur réaction et/ou adapter leur conduite vis-à-vis du motard.

Un second ensemble de sources lumineuses 3 est agencé dans la structure du casque 1 de manière à être visible selon une seconde direction. En pratique, ce second ensemble est disposé à l'arrière du casque 1, sous la calotte externe rigide, au niveau d'une zone translucide de cette dernière. Ainsi, lorsque le second ensemble 3 est éclairé, le signal lumineux émis est visible par les autres conducteurs qui se trouvent derrière le motard. Ces conducteurs peuvent donc une nouvelle fois anticiper leur réaction et/ou adapter leur conduite vis-à-vis du motard.

Dans le cas d'un vêtement à manches (ex : un blouson de moto, de ski, de vélo, ....), le premier ensemble 2 est avantageusement disposé à l'avant dudit vêtement ou sur ses manches, et le second ensemble 3 est avantageusement disposé dans le dos dudit vêtement.

Les différents ensembles 2, 3 sont éloignés l'un de l'autre de manière à ce qu'ils soient chacun visible selon une direction différente. Il est bien évidemment envisageable de prévoir plus de deux ensembles de sources lumineuses, chacun de ces ensembles étant disposé selon une direction différente. Le résultat obtenu est que le casque 1 est visible par un grand nombre de personnes, et pas seulement celles se trouvant derrière l'utilisateur comme c'est généralement le cas avec les accessoires connus de l'art antérieur.

Les sources lumineuses de chaque ensemble 2, 3 consistent préférentiellement en des LEDs et plus particulièrement en des LEDs reliées à des fibres optiques connectées à un film polymère réfléchissant. On obtient ainsi un film lumineux fin et souple, peu encombrant, et qui peut facilement s'adapter aux formes de la structure support 10, 11. De tels films lumineux sont par exemple décrits dans les documents brevets US5312569 (MEZEI) et US5499912 (MEZEI). Chaque ensemble 2, 3 de sources lumineuses peut également consister en un film souple comprenant des points lumineux se présentant sous la forme de pixels, par exemple du type écran souple LCD. Cette dernière solution permet de créer des animations sur le film souple qui pourront être personnalisables. Les sources lumineuses du premier 2 et/ou du second ensemble 3, peuvent être dépendantes les unes des autres (c'est-à-dire qu'elles sont toutes allumées et éteintes en même temps), ou indépendantes les unes des autres (c'est-à-dire qu'elles peuvent être chacune allumées et éteintes de manière individuelle),. Les sources lumineuses peuvent être de couleur différente, ou apte à émettre des lumières de couleurs différentes. Leur intensité lumineuse peut également être modifiée. Pour cette raison, la technologie LED est préférée. On peut par exemple prévoir que les sources lumineuses du premier ensemble 2 s'éclairent dans une gamme de couleur allant du bleu au vert et que celles du second ensemble 3 s'éclairent dans une gamme de couleur allant du orange au rouge.

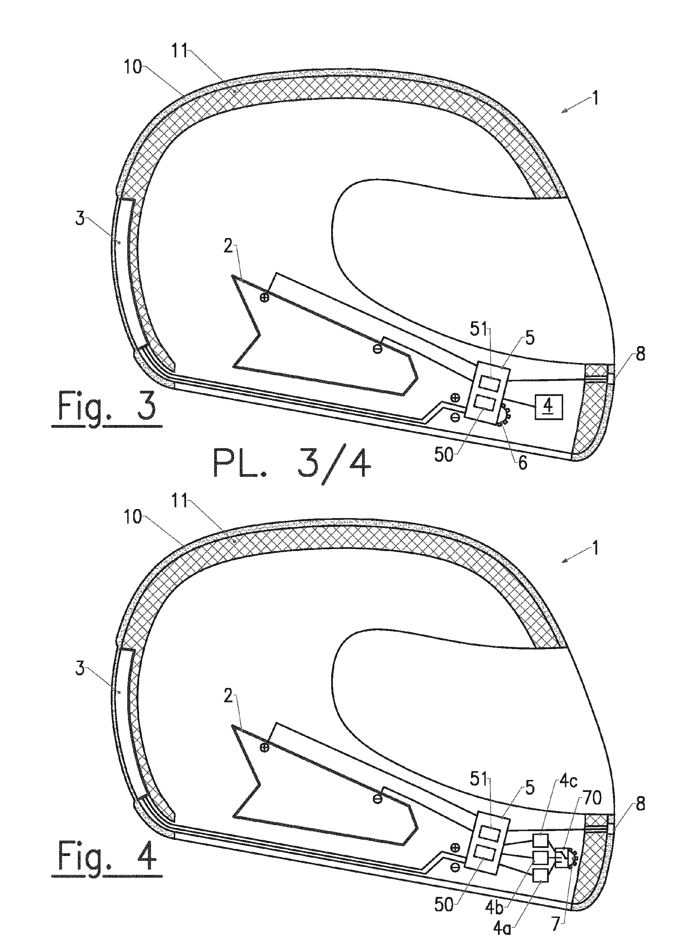

L'éclairage du casque 1 est basé sur la mesure des accélérations du motard le portant, et la génération de consignes d'éclairage à destination des ensembles de sources lumineuses 2, 3 en fonction des accélérations positives ou négatives mesurées. Pour ce faire, en se rapportant à la figure 3, au moins un accéléromètre 4 est monté sur la structure du casque 1 de façon à mesurer les accélérations du motard. En pratique, cet accéléromètre 4 est intégré dans la partie avant du casque 1. Il est configuré pour mesurer les accélérations linaires (positives ou négatives) du motard selon au moins deux axes (préférentiellement l'axe d'avancement X de la moto et l'axe Y situé dans le même plan horizontal que l'axe X mais perpendiculairement à ce dernier) et préférentiellement selon encore un troisième axe (l'axe vertical Z, orthogonal aux axes X et Y). De cette façon, quelle que soit la position et l'orientation de la tête du motard, l'accélération de ce dernier est correctement mesurée. L'accéléromètre 4 émet des signaux électriques dont l'intensité est proportionnelle à l'accélération positive ou négative mesurée.

Un moyen de traitement 5 est monté dans la structure support 10, 11. Ce moyen de traitement 5 est connecté d'une part à l'accéléromètre 4 et d'autre part aux premier 2 et second 3 ensembles de sources lumineuses. En fonction des accélérations mesurées, le moyen de traitement 5 émet des consignes d'éclairage vers les ensembles lumineux. En pratique, le moyen de traitement 5 consiste en une unité de gestion électronique montée sur un circuit imprimé et comprenant une zone mémoire 50 dans laquelle sont enregistrées des instructions et un processeur 51. Quand l'unité est sollicitée par l'accéléromètre 4, les instructions sont exécutées par le processeur 51 de manière à convertir les signaux électriques émis par ledit accéléromètre en des consignes d'éclairage à destination des ensembles 2, 3. Plus particulièrement et conformément à l'invention, les instructions enregistrées dans la zone mémoire 50 permettent de :
- éclairer le premier ensemble 2 en réponse à une accélération positive (accélération pure), l'éclairage consistant à faire varier l'intensité lumineuse des sources lumineuses dudit premier ensemble en fonction de ladite accélération mesurée,
- et éclairer le second ensemble 3 en réponse à une accélération négative (ou décélération), l'éclairage consistant à faire varier l'intensité lumineuse des sources lumineuses dudit second ensemble en fonction de ladite accélération mesurée.

En outre, les instructions permettent d'éclairer les deux ensembles 2, 3 de sources lumineuses de manière indépendante. Si l'accéléromètre 4 détecte une accélération positive, alors le moyen de traitement 5 n'éclaire que le premier ensemble 2. Et si l'accéléromètre 4 détecte une accélération négative, alors le moyen de traitement 5 n'éclaire que le second ensemble 3.

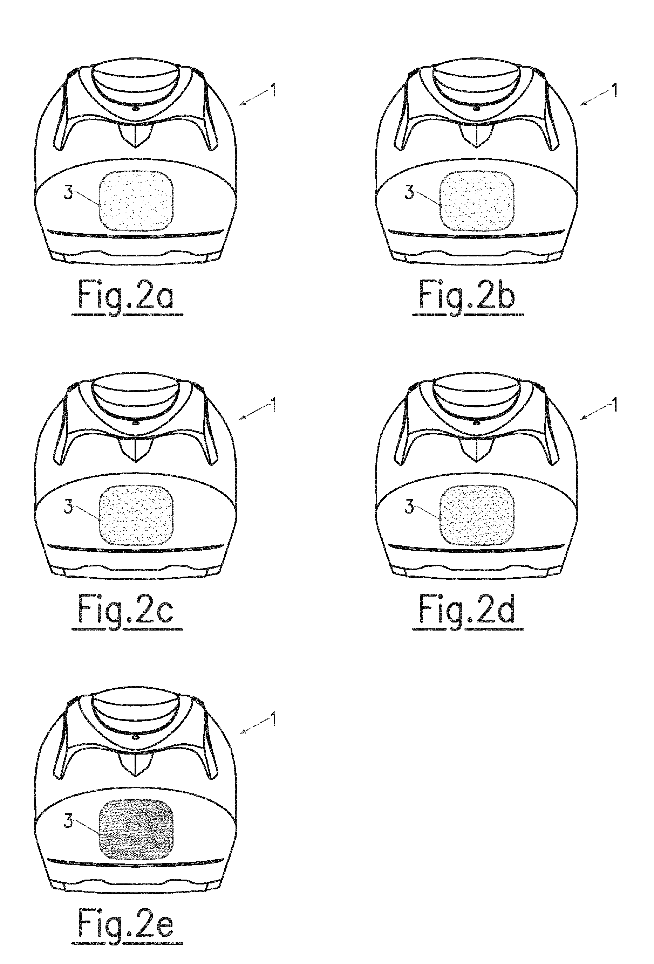

Les figures 1a à 1e, 2a à 2e et 5 illustrent une animation où l'intensité lumineuse des sources lumineuses des ensembles 2, 3, varie de façon séquentielle en fonction de l'accélération mesurée (positive ou négative). Cinq séquences lumineuses sont prévues. Lorsque la valeur absolue de l'accélération mesurée (positive ou négative), est comprise entre 0 m/s et une première valeur « A1 » m/s prédéterminée, alors l'intensité lumineuse de chaque source lumineuse est par exemple égale à 20 % de l'intensité maximale (les sources lumineuses sont toujours éclairées) (figures 1a et 2a). Lorsque la valeur absolue de l'accélération mesurée, est comprise entre la première valeur « A1 » m/s et une seconde valeur « A2 » m/s prédéterminée, alors l'intensité lumineuse des sources lumineuses est égale à 40% de l'intensité maximale. Il s'agit par exemple d'une faible accélération ou d'un faible freinage à priori sans risque, et qui sont signalés par une intensité lumineuse modérée (figures 1b et 2b). Lorsque la valeur absolue de l'accélération mesurée, est comprise entre la seconde valeur « A2 » m/s et une troisième valeur « A3 » m/s prédéterminée, alors l'intensité lumineuse des sources lumineuses est égale à 60% de l'intensité maximale. Il s'agit par exemple d'une accélération ou d'un freinage moyen, potentiellement dangereux, et qui sont signalés par une intensité lumineuse soutenue (figures 1c et 2c). Lorsque la valeur absolue de l'accélération mesurée, est comprise entre la troisième valeur « A3 » m/s et une quatrième valeur « A4 » m/s prédéterminée, alors l'intensité lumineuse des sources lumineuses est égale à 80% de l'intensité maximale. Il s'agit par exemple d'une accélération ou d'un freinage brusque, et qui sont signalés par une forte intensité lumineuse (figures 1d et 2d). Lorsque la valeur absolue de l'accélération mesurée, est comprise entre la quatrième valeur « A4 » m/s et une cinquième valeur « A5 » m/s prédéterminée, alors l'intensité lumineuse des sources lumineuses est égale à 100% de l'intensité maximale. Il s'agit par exemple d'une accélération ou d'un freinage d'urgence dangereux, et qui sont signalés par une très forte intensité lumineuse (figures 1e et 2e). Cette illumination séquentielle est particulièrement efficace car elle permet d'émettre des signaux lumineux très marqués à destination des autres utilisateurs. Ces derniers sont immédiatement avertis lorsque l'intensité lumineuse croît brusquement d'un seuil à un autre.

Les valeurs A1, A2, A3, A4 et A5 peuvent être différentes selon que l'accéléromètre 4 détecte une accélération ou une décélération.

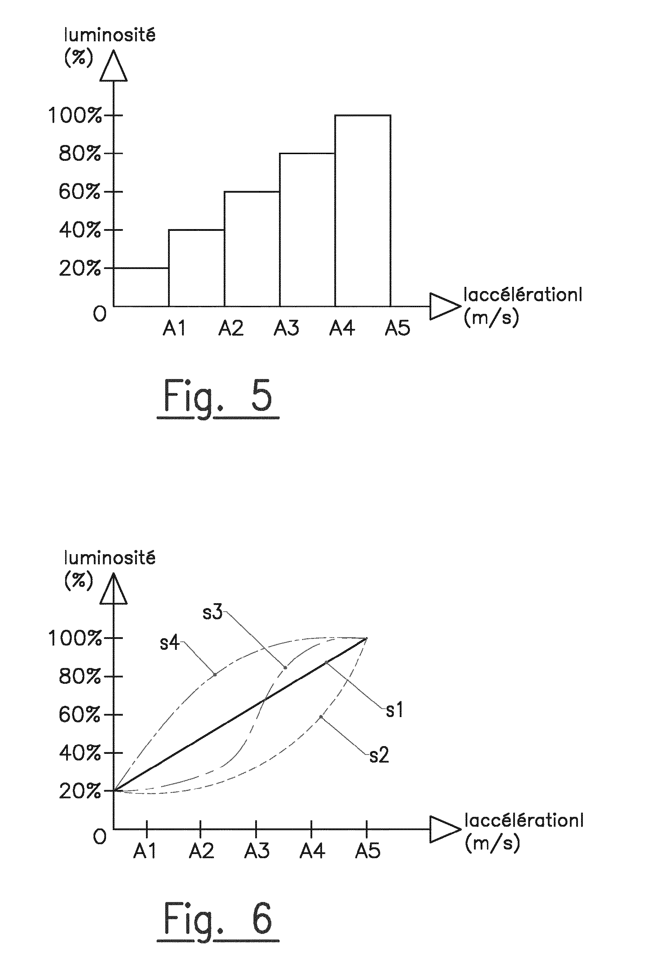

La figure 6 illustre une autre animation où l'intensité lumineuse des sources lumineuses des ensembles 2, 3, varie de façon continue, linéairement (courbe s1) ou non (courbes s2 à s4) en fonction des accélérations mesurées (positive ou négative).

Dans une variante de réalisation non représentée, le moyen de traitement 5 est apte à émettre des consignes d'éclairage (en intensité et/ou en couleur) consistant en des animations lumineuses dont les séquences sont modifiées en fonction des accélérations mesurées. Par exemple, les séquences de l'animation peuvent changées dès que la valeur absolue de l'accélération mesurée (positive ou négative) dépasse des seuils de valeurs prédéterminés (par ex : 0-A1 ; A1-A2 ; A2-A3 ; A3-A4 ; A4-A5). Par « animation », on entend que les sources lumineuses d'un ensemble 2, 3, sont chacune allumées suivant une programmation définie afin d'obtenir un effet visuel qui change à chaque séquence. D'autres scénarios sont envisageables tels que des éclairages stroboscopiques dont les fréquences sont plus ou moins rapides selon l'accélération mesurée.

Selon l'application (pratique de la moto en ville ou sur route, utilisation d'une moto de petite cylindrée ou de grosse cylindrée, pratique du vélo, du ski, d'un sport équestre, ...), les accélérations ne sont pas les mêmes. Il est ainsi avantageux de pouvoir régler la sensibilité de l'accéléromètre 4 en fonction de l'application. Selon un premier mode de réalisation schématisé sur la figure 3, un moyen de réglage 6 de la sensibilité de l'accéléromètre 4 est monté sur la structure support 10, 11. Il s'agit en pratique d'un bouton de type potentiomètre, agencé dans le calotin interne 11, sous la calotte externe 10, de manière à pouvoir être activé manuellement par l'utilisateur. Différentes positions sont prévues selon le type d'application. Ce bouton est par exemple positionné au niveau de la protection maxillo-faciale du casque 1. Le moyen de réglage 6 est connecté au moyen de traitement 5 de manière à sélectionner une plage de sensibilité de l'accéléromètre 4.

Dans une variante de réalisation schématisée sur la figure 4, la structure support 10, 11 intègre plusieurs accéléromètres 4a, 4b, 4c ayant des plages de sensibilité différentes. Le premier accéléromètre 4a convient par exemple pour les faibles accélérations (0,5 G à +/- 2G), un second accéléromètre 4b pour les moyennes accélérations (+/- 2G à +/- 4G) et un troisième accéléromètre 4c pour les fortes accélérations (+/- 4G à +/- 6G). Il est prévu un dispositif pour sélectionner les accéléromètres, ledit dispositif étant monté sur la structure support 10, 11 de manière à pouvoir être activé manuellement par l'utilisateur. Il s'agit en pratique d'un bouton de type potentiomètre 7, dans le calotin interne 11, sous la calotte externe 10, de manière à pouvoir être activé manuellement par l'utilisateur. Différentes positions sont prévues selon l'accéléromètre 4a, 4b ou 4c à sélectionner. Ce bouton est par exemple positionné au niveau de la protection maxillo-faciale du casque 1. Ce bouton 7 est relié à un sélecteur 70 (ou « switch » en anglais), permettant de sélectionner l'accéléromètre correspondant au réglage dudit bouton.

Selon une caractéristique avantageuse de l'invention, il est prévu un commutateur (non représenté) pour activer ou désactiver le premier 2 et/ou le second 3 ensemble de sources lumineuses. Ce commutateur est monté sur la structure support 10, 11, et est agencé de manière à pouvoir être activé manuellement par l'utilisateur. Ce commutateur peut par exemple consister en un bouton offrant plusieurs positions : une première position d'arrêt où aucun des ensembles lumineux 2, 3, n'est susceptible d'être éclairé ; une position active où les ensembles lumineux 2 et/ou 3, sont susceptibles d'être éclairés ; et une position intermédiaire où seul le premier ensemble 2 est susceptible d'être éclairé, le second ensemble 3 étant désactivé. Cette dernière position est notamment utilisée lorsque l'utilisateur transporte un passager qui est susceptible d'être gêné par l'éclairage du second ensemble 3.

En se rapportant aux figures 3 et 4, un capteur de luminosité 8 est monté sur la structure support 10, 11. Ce capteur 8 est relié au moyen de traitement 5 et permet de déconnecter les ensembles lumineux 2, 3 lorsque la luminosité ambiante est trop élevée pour rendre l'éclairage visible ou efficace.

L'ensemble des composants décrits précédemment sont alimentés électriquement par l'intermédiaire d'une alimentation électrique (non représentée) intégrée dans la structure support 10, 11. Cette alimentation électrique consiste typiquement en des accumulateurs au lithium dont la tension maximale correspond aux normes de sécurité en vigueur. Ces accumulateurs sont rechargeables par connexion à un transformateur-régulateur externe. Une fiche de connexion dédiée est, de fait, avantageusement prévue dans la structure support 10, 11.

Le procédé de fabrication du casque 1 schématisé sur les figures annexées, est le suivant :
a) moulage de la calotte externe 10. On utilise préférentiellement des matières composites (fibres de verre + résine), polycarbonate injecté, ou toute autre matière équivalente. Les matériaux composites ou polycarbonates injectés sont translucides. Il est avantageux de prévoir des couches de moindre épaisseur au niveau des zones à éclairer, de façon à améliorer la transparence,
b) positionnement de pochoirs sur la calotte externe 10 au niveau des zones à éclairer. On crée ainsi des zones de réservation,
c) préparation de la calotte externe 10 en vue de la peindre,
d) peinture de la calotte externe 10,
e) enlèvement des pochoirs de façon à découvrir les zones de réservations transparentes,
f) vernissage de la calotte externe 10,
g) application des décorations par pose de décalques sérigraphiés. Pour les zones de réservation, on applique des décalques sérigraphiés avec des zones transparentes pour laisser passer la lumière,
g') éventuellement, second vernissage de la calotte externe 10 décorée.
h) mise en place du calotin interne 11. L'ensemble des composants décrits précédemment sont intégrés entre la calotte externe 10 et le calotin interne 11 en polystyrène. Le calotin 11 est une pièce obtenue par moulage, et qui présente des logements spécifiquement dédiés aux différents composants.

On comprend que les différentes étapes de ce procédé de fabrication sont indépendantes du type de consignes d'éclairage susceptibles d'être générées par le moyen de traitement 5.

## Revendications

1. Casque de protection conçu pour être portée par un utilisateur, ledit casque comportant une calotte externe (10) et un calotin interne (11), ledit casque comportant :
- un premier ensemble (2) de sources lumineuses agencé sur les côtés et/ou à l'avant dudit casque de manière à être visible selon une première direction,
- un second ensemble (3) de sources lumineuses agencé à l'arrière dudit casque de manière à être visible selon une seconde direction,
- les deux ensembles (2, 3) de sources lumineuses sont éloignés de manière à ce qu'ils soient chacun visible selon une direction différente, les deux dits ensembles étant éclairés de manière indépendante,
- l'éclairage du second ensemble (3) de sources lumineuses est indépendant de l'éclairage du premier ensemble (2) de sources lumineuses,
- au moins un accéléromètre (4) monté de façon à mesurer les accélérations de l'utilisateur portant ledit casque, ledit accéléromètre émettant des signaux électriques dont l'intensité est proportionnelle à l'accélération mesurée,
- un moyen de traitement (5) monté dans ledit casque et connecté d'une part à l'accéléromètre (4) et d'autre part aux premier et second ensembles (2, 3) de sources lumineuses, ledit moyen de traitement étant configuré pour convertir les signaux émis par ledit accéléromètre en des consignes d'éclairage à destination desdits ensembles,
**se caractérisant par le fait que**
- les ensembles de sources lumineuses sont agencés dans la structure du casque, entre la calotte externe (10) et le calotin interne (11), lequel calotin présente des logements spécifiquement dédiés aux différents composants,
- le premier ensemble (2) est disposé sous la calotte externe rigide, au niveau d'une zone translucide de cette dernière,
- le second ensemble (3) est disposé sous la calotte externe rigide, au niveau d'une zone translucide de cette dernière,
- le moyen de traitement (5) est configuré pour :
○ émettre des consignes d'éclairage vers le premier ensemble (2) de sources lumineuses en réponse à la mesure d'une accélération positive, lesdites consignes d'éclairage consistant à faire varier l'intensité lumineuse desdites sources en fonction de ladite accélération mesurée,
○ émettre des consignes d'éclairage vers le second ensemble (3) de sources lumineuses en réponse à la mesure d'une accélération négative, lesdites consignes d'éclairage consistant à faire varier l'intensité lumineuse desdites sources en fonction de ladite accélération mesurée.

2. Casque selon la revendication 1, dans lequel l'intensité lumineuse des sources lumineuses du premier ensemble (2) et du second ensemble (3) varie séquentiellement en fonction des accélérations mesurées.

3. Casque selon la revendication 1, dans lequel l'intensité lumineuse des sources lumineuses du premier ensemble (2) et du second ensemble (3), varie de façon continue en fonction des accélérations mesurées.

4. Casque selon la revendication 1, dans lequel l'éclairage des sources lumineuses du premier ensemble (2) et du second ensemble (3), consiste en des animations lumineuses dont les séquences sont modifiées en fonction des accélérations mesurées.

5. Casque selon la revendication 1, dans lequel le moyen de traitement (5) est configuré pour émettre des consignes d'éclairage consistant en des animations lumineuses dont les séquences sont modifiées dès que la valeur absolue de l'accélération mesurée dépasse des seuils de valeurs prédéterminés (0-A1 ; A1-A2 ; A2-A3 ; A3-A4 ; A4-A5).

6. Casque selon l'une des revendications 1 ou 5, dans lequel le moyen de traitement (5) consiste en un processeur (51) associé à une zone mémoire (50) contenant des instructions qui, lorsqu'elles sont exécutées, commandent ledit processeur pour émettre les consignes d'éclairage.

7. Casque selon l'une des revendications précédentes, dans lequel l'accéléromètre (4) est configuré pour mesurer les accélérations de l'utilisateur selon au moins deux axes.

8. Casque selon l'une des revendications précédentes, dans lequel un moyen de réglage (6) de la sensibilité de l'accéléromètre (4) est monté dans le calotin interne (11), sous la calotte externe (10), ledit moyen de réglage étant agencé de manière à pouvoir être activé manuellement par l'utilisateur portant ledit casque.

9. Casque selon l'une des revendications 1 à 7, dans lequel la structure (10, 11) dudit casque intègre plusieurs accéléromètres (4a, 4b, 4c) ayant des plages de sensibilité différentes, un dispositif (7, 70) pour sélectionner lesdits accéléromètres étant monté sur ladite structure, ledit dispositif de sélection étant agencé sur ladite structure de manière à pouvoir être activé manuellement par l'utilisateur portant ledit casque.

10. Casque selon l'une des revendications 1 à 7, dans lequel un commutateur pour activer ou désactiver le premier ensemble (2) de sources lumineuses et/ou le second ensemble (3) de sources lumineuses est monté sur la structure (10, 11) dudit casque, ledit commutateur étant agencé sur ladite structure de manière à pouvoir être activé manuellement par l'utilisateur portant ledit casque.

11. Casque selon l'une des revendications 1 à 10, dans lequel les sources lumineuses de chaque ensemble (2, 3) consistent en des LEDs reliées à des fibres optiques connectées à un film polymère réfléchissant.

12. Casque selon l'une des revendications 1 à 10, dans lequel chaque ensemble (2, 3) de sources lumineuses consiste en un film souple comprenant des points lumineux se présentant sous la forme de pixels.

13. Procédé de fabrication du casque selon la revendication 1, ledit procédé comprenant les étapes consistant à :
a) mouler la calotte externe (10) en utilisant des matériaux composites ou polycarbonates translucides.
b) positionner des pochoirs sur la calotte externe (10) au niveau des zones à éclairer de manière à créer des zones de réservation,
c) préparer la calotte externe (10) en vue de la peindre,
d) peindre la calotte externe (10),
e) enlever les pochoirs de façon à découvrir les zones de réservations transparentes,
f) vernir la calotte externe (10),
g) appliquer, sur les zones de réservation, des décalques sérigraphiés avec des zones transparentes pour laisser passer la lumière,
h) mettre en place le calotin interne (11) dans lequel sont intégrés l'ensemble des composants, ledit calotin présentant des logements spécifiquement dédiés auxdits différents composants.

14. Procédé selon la revendication 13, dans lequel on moule la calotte externe (10) en prévoyant des couches de moindre épaisseur au niveau des zones à éclairer, de façon à améliorer la transparence.

15. Procédé selon la revendication 13, consistant à vernir de nouveau la calotte externe (10) après l'étape g).
